# EUROPEAN PATENT SPECIFICATION

(11) **EP 0 622 669 B1**
(45) Date of publication and mention of the grant of the patent: **30.06.1999**
(21) Application number: 93106968.6
(22) Date of filing: 29.04.1993
(51) Int. Cl.: G03C 5/26, G03C 5/29, H04N 1/028

(54) **System for electronically processing exposed photographic materials**
System zur elektronischen Verarbeitung von belichteten photographischen Materialien
Système de traitement électronique de matériaux photographiques exposés

(43) Date of publication of application: 02.11.1994
(73) Proprietor: Imation Corp., St. Paul, Minnesota 55164-0898 (US)
(72) Inventor: Bracco, Roberto, I-17016 Ferrania (Savona) (IT); Stefanini, Dario, I-17016 Ferrania (Savona) (IT); Smith, David, Peter, Henry, The Pinnacles, Harlow, Essex (GB)
(74) Representative: Allaix, Roberto

(56) References cited:
- EP-A- 0 301 800
- US-A- 3 739 705
- US-A- 4 134 137
- US-A- 4 777 102

## Description

### FIELD OF THE INVENTION

This invention relates to a process for electronic development of conventional silver halide photographic materials, in particular black-and-white and color photographic materials and to the apparatus for performing such a process. More specifically, the present invention provides an apparatus which is able to discriminate the formation of latent image, in an image-wise exposed silver halide photographic material, by means of measurements of the Dember effect of the silver halide grain emulsion.

### BACKGROUND OF THE ART

The latent image in a silver halide crystal is formed by exposure of the crystal to an electromagnetic radiation to which the crystal is sensitive or is sensitized. The energy of the electromagnetic radiation promotes the formation of an electron-hole pair having different mobilities in the grain. The combination of a photoelectron with a interstitial silver ion forms the silver speck responsible for the latent image cluster. A more detailed description of the mechanism of formation of the latent image can be found in T.H.James, "***The Theory of the Photographic Process***", Fourth Edition, pp. 105-132, Macmillan Publishing Co., Inc., New York.

Several literature references relate to the measurement of photoconductivity of emulsion coatings to correlate the observations with sensitometric properties, spectral sensitization, and the latent image formation mechanism.

Measurements of photoconductivity can be performed by means of microwave radiations, as described, for example, in L.M.Kellog et al. Photographic Science Engineering, Vol. 16, p. 115 (1972), J.Beutel, Photographic Science Engineering, Vol. 19, p. 95 (1975), and T.Taneda, Journal of Imaging Science, Vol. 33, p. 115 (1989). A method for detecting latent image formation in silver halide using microwave photoconductivity has been described by A.Hasegawa and T.Sakaguchi, Journal of Imaging Science, Vol. 30, p. 13. However, such a method is not sufficiently sensitive to detect low exposure levels.

Kellog et al. in US 4,788,131 describe a technique to detect the presence of latent image by using a radiofrequency photoconductivity apparatus. This method is more sensitive, but needs a cooling stage to have reproducible results.

Levine in US 4,777,102 and 4,751,583 describes a method and an apparatus for electronic development of photographic films by applying a laser beam to an image-wise exposed photographic material. Each portion of the pre-exposed photographic material absorbs a different amount of light energy according to the extent of the latent image formed during the prior exposure. By detecting the light energy not absorbed by each area of the photographic film it is then possible to detect and electronically reproduce the latent image.

Another approach for measuring photoconductivity of silver halides employs the photovoltaic effect or "Dember effect". This effect relates to the formation of a photovoltage when a strongly absorbed radiation is incident on the surface of a semiconductor. The main requirements for the formation of the Dember effect are a difference between electron and hole mobilities and an inhomogeneous light absorption by the sample. In the literature the Dember effect is widely used to understand the effective mobility and number of one of the three charge carriers occurring by exposure to light silver halide materials, i.e., photoelectrons, positive holes, and interstitial silver ions.

Reference to this method can be found in:
- Y.T.Tan et al., J. of Appl. Phys., Vol. 40, p.66 (1969), - B. Levy, Phot. Science Eng., Vol. 15, p. 279 (1971),
- Levy et al., Phot. Science Eng., Vol. 17, p. 115 (1973),
- V.G.Vlasov et al., Phot. Science Eng., Vol. 17, p. 343 (1973),
- Dickson et al., Phot. Science Eng., Vol. 18, p. 524 (1974),
- M.Saito, J. of Phot. Science, Vol. 24, p. 205 (1976),
- A.M.Kahan, Phot. Science Eng., Vol. 21, p. 237 (1977),
- K.C.Chang et al., Phot. Science Eng., Vol. 24, p. 55 (1980),
- K.C.Chang et al., Phot. Science Eng., Vol. 25, p. 138 (1981), and
- T.Kaneda et al., Journal of Im. Science, Vol. 31, p. 50 (1987).

The methods and the apparatus disclosed in the above mentioned references have been employed up to now for scientific and academic purposes. During the last twenty years this method has been applied to study the effect of chemical and spectral sensitization on the mechanism of formation of the latent image to improve scientific knowledge with the aim of obtaining a correlation between the variation of the Dember effect and the modification of the structure of silver halide grains promoted by additional compounds (chemical sensitizers, spectral sensitizing dyes, dopants, antifoggants and the like).

The present invention provides a method and an apparatus which allows the processing and the reproduction of an image stored in an image-wise exposed silver halide photographic material.

### SUMMARY OF THE INVENTION

Accordingly, the present invention relates to a method of electronic processing of an image-wise exposed photographic material comprising at least one light-sensitive silver halide emulsion layer said method comprising the steps of:
(1) placing said exposed photographic material between the electrodes of a capacitor connected to an amplifier,
(2) scanning said material by means of at least one radiation beam,
(3) amplifying the electrical signal coming from said capacitor electrodes,
(4) converting the amplified signal into a digital signal, and
(5) storing the digital signal in a recording apparatus.

In another aspect the present invention relates to an apparatus for electronic processing an image-wise exposed photographic material comprising at least one light-sensitive silver halide emulsion layer, said apparatus comprising:
(1) means to provide a radiaiton beam coming from a radiation source,
(2) means to hold the image-wise exposed silver halide photographic material between a front transparent electrode and a back electrode, said transparent electrode being between said radiation source and said exposed photographic material,
(3) means to scan the silver halide photographic material by the radiation beam coming from said radiation source, which beam generates an electrical signal in said electrodes,
(4) means to amplify the elcrtical signal coming from said electrodes,
(5) means to convert said electrical signal into a digital signal, and
(6) means to store said digital signal.

### BRIEF DESCRIPTION OF THE FIGURES

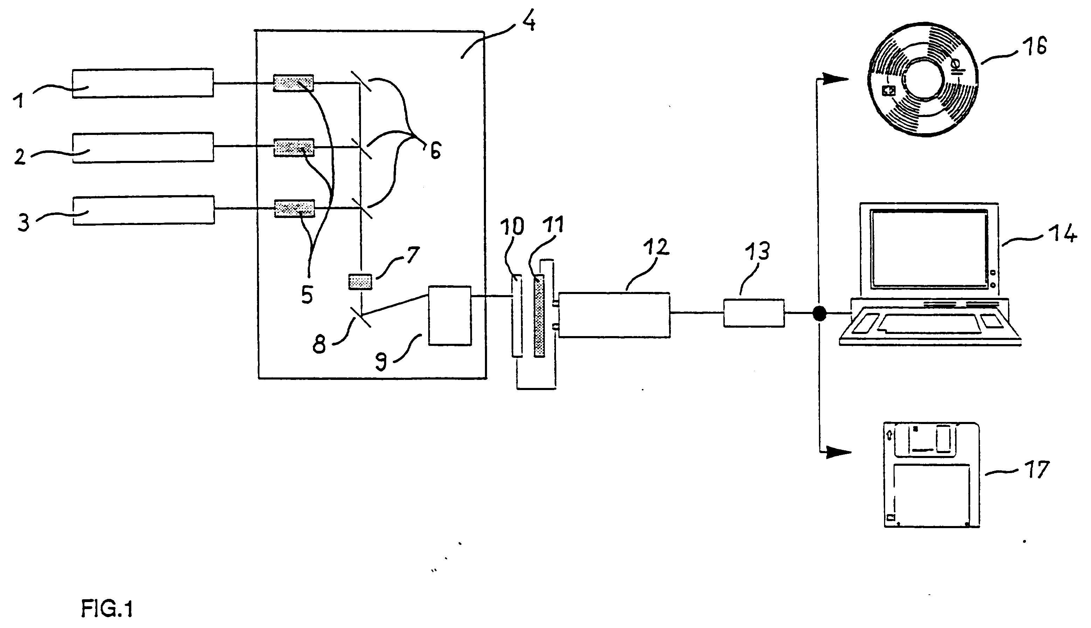

Figure 1 illustrates a schematic example of the apparatus according the present invention, for electronic processing a color photographic material comprising three silver halide emulsion layers each sensitized to a different wavelength.

### DETAILED DESCRIPTION OF THE INVENTION

The present invention relates to a method of electronic processing of an image-wise exposed photographic material comprising at least one light-sensitive silver halide emulsion layer said method comprising the steps of:
(1) placing said material between the electrodes of a capacitor connected to an amplifier,
(2) scanning said material by means of at least one radiation beam, generating an electrical signal between said electrodes,
(3) amplifying the electrical signal coming from said capacitor electrodes,
(4) converting the amplified signal into a digital signal, and
(5) storing the digital signal in a recording apparatus.

The method of the present invention allows scanning of the total surface of an image-wise exposed silver halide photographic material with a radiation beam focused on a single pixel of the photographic material. During the scanning each illuminated pixel gives rise to a photovoltaic effect (Dember effect) which can be proportionally correlated to the latent image formed during image-wise exposure of the photographic material.

The photovoltaic effect results in an electrical signal which has an intensity and decay time which are related to the number of excited photoelectrons and their lifetime, and then to the presence of the silver cluster formed during the image-wise exposure. In other word, the dishomogeneous absorbtion of the inducing radiation beam trough each emulsion grain generates a gradient in the concentration of photoelectrones and promotes the formation of an electric field in each silver halide grain.

The electric field can be detected as electrical signal by placing the photographic material between two electrodes of a capacitor connected to an amplifier. The capacitor consists of two electrodes, the front electrode (i.e., the electrode facing the radiation source) being a transparent one, and the back electrode being made of metal or metal-coated.

The front transparent electrode can be realized of conductive glass, such as for example, Nesa glass, SnO₂ coated glass, silver coated quartz, and the like. The back electrode can comprise metals, such as, for example, stainless steel, copper, silver, gold, brass, and the like. Metal coated electrodes can also be employed as back electrodes.

A thin film of polymers, such as, polyester film can be interposed between the photographic material and each electrode.

As the radiation source, a laser beam is preferably employed. Examples of useful laser source are a HeCd laser source having an emission maximum at 441 nm, an Ar laser source having an emission maximum at 514 nm, a HeNe laser source having an emission maximum at 632 nm, or a GaAs laser source having a variable emission maximum at 750, 820 or 890 nm.

By employing a laser beam having a wavelength centered on the maximum sensitivity of the photographic material, it is possible to obtain an electrical signal for each pixel of the scanned photographic material, each electrical signal being an information of the level of exposure of the pixel area.

To have a high resolution of the scanned image the laser beam should be focused on an area as small as possible. The lower the diameter of the laser beam, the higher the resolution of the resulting electronic image. The diameter of the laser beam should be equal to or lower than 2.0 mm, preferably lower than 1.0 mm, more preferably lower than 0.5 mm.

As already mentioned the laser beam which illuminates a single pixel of the photographic material is dishomogeneously adsorbed by each silver halide grain and promotes the formation of an electric field which can be detected by the capacitor. The formation of an electric field between the capacitor electrodes generates a voltage variation, which is sent to an amplifier as an electric signal.

The scanning apparatus can be represented by a system of rotating mirrors which allows a horizontal and vertical scanning of the photographic material. The movement of the mirrors corresponds to the resolution of the final image. Of course, the amplitude of the mirror movement is correlated with the diameter of the laser beam, i.e., the lower the laser beam diameter, the lower the amplitude of the movement. For example, a laser beam having a diameter of 0.1 mm allows the use of a mirror movement corresponding to a scanning not lower than 0.1 mm. Alternatively, the scanning of the photographic material can be obtained providing the holding means on a slide which can be moved in an horizontal and vertical direction, so that the photographic material is moved relative to the laser beam. The above described scanning means can also be combined by providing a single movement for each system, such as, for example, the scanning mirror having a horizontal movement, and the holding means having a vertical movement, so that the photographic material is moved vertically each times a total line is scanned by the laser beam. Scanning means of this kind are widely known in the art of apparatus for laser printing and/or read-out.

The electrical signal obtained for each exposure of the laser beam during scanning is then amplified and converted in a digital signal which can be recorded by a suitable programmed computer hardware for following processing. An example of suitable amplifier is the EG&G 5006 1000X differential amplifier. The amplified signal can be fed to an oscilloscope for reduction to a fixed scale and for conversion into a digital form, such as, for example, by an Analogic DATA 6000 or a Gould 4072 waveform analyzer, which acquires single-shot measurements and store them on a magnetic medium. Each signal is recorded together with the spatial coordinates of the scanning apparatus so as to provide an electronic map of the level of exposure of the total image-wise exposed photographic material. The scanning means and the acquisition of the signal are then controlled by a properly programmed computer.

The digital signal so obtained can be further processed in a suitably programmed computer hardware. The resulting electronic image can be visualized, for example, by sending the processed signal to a plotter or to a video display. Alternatively, the digital signal can be stored on an optical support, such as, for example, a photo compact disc, or a magnetic support, such as, for example a computer diskette for further processing. The stored digital signal can be further processed in any known apparatus for data handling. The processing can, for example, enhance or alter the image content. The stored signal can also be used to drive an image output device like hardcopy based systems (e.g., printers, color laser imagers, photo CD based systems, and the like) or non-hardcopy systems, such as, for example, a cathode ray device.

The photographic material employed in the method and apparatus of the present invention can be any conventionally known silver halide photographic material.

Examples of silver halide photographic materials which can be processed according the method of the present invention are light-sensitive photographic color materials such as color negative films, color reversal films, as well as black-and-white light-sensitive photographic materials such as X-ray light-sensitive materials, lithographic light-sensitive materials, black-and-white negative films, and dry-silver photographic material.

The light-sensitive silver halide photographic material used in this invention can be prepared by coating the light-sensitive silver halide emulsion layer or layers and other auxiliary layers on a support. There is no limitation with respect to the support. Examples of materials suitable for the preparation of the support include glass, paper, polyethylene-coated paper, metals, cellulose nitrate, cellulose acetate, polystyrene, polyethylene terephthalate, polyethylene, polypropylene and other well known supports.

Examples of X-ray light-sensitive materials comprise a silver halide emulsion layer or layers coated on one or both surfaces of a support, preferably a polyethylene terephthalate support.

Color photographic elements useful in the process of the present invention are multilayer color elements comprising a blue sensitive or sensitized silver halide emulsion layer associated with yellow dye-forming color couplers, a green sensitized silver halide emulsion layer associated with magenta dye-forming color couplers and a red sensitized silver halide emulsion layer associated with cyan dye-forming color couplers. The layers may be sensitized with false color addressing as shown in US Patent 4,619,892.

The silver halide employed in this invention may be any of silver chloride, silver bromide, silver iodide, silver chlorobromide, silver chloroiodide, silver bromoiodide and silver chloroiodobromide.

The silver halide grains in the photographic emulsion may be regular grain having a regular crystal structure such as cube, octahedron, and tetradecahedron, or the spherical or irregular crystal structure, or those having crystal defects such as twin plane, or those having a tabular form, or the combination thereof.

Other references to silver halide photographic materials can be found in ***Research Disclosure*** Vol. 308, December 1989, Item 308119. ***Research Disclosure*** is a publication of Kenneth Mason Publications, Ltd., Dudley Annex, 21a North Street, Emsworth, Hampshire, England.

An example of embodiment of the apparatus of the present invention is shown in Figure 1. Fig. 1 shows the apparatus for electronic processing a color photographic material comprising three silver halide emulsion layers each sensitized to a different wavelength. The apparatus of the present invention provides the subsequent scanning of each layer by means of three different laser sources. The scanning of the blue sensitive emulsion layer is performed by a HeCd laser 1 having an emission maximum at 441nm, the scanning of the green sensitive emulsion layer is performed by a Ar laser 2 having an emission maximum at 514nm, and the scanning of the red sensitive emulsion layer is performed by a HeNe laser 3 having an emission maximum at 632nm.

An optical system 4 provides the scan of the laser beam on the surface of the photographic material held between two electrodes 10 and 11. The optical system 4 comprises three modulators 5 focusing the laser beam on three mirrors 6. Each of said mirror 6 can be switched to alternatively provide the passage of a single laser beam. The laser beam reflected by the mirrors 6 is focused by an optical lens 7 on a rotating mirror 8 which reflects the laser beam on a scanning optical system 9. The front electrode 10 is transparent and consists of a silver coated Nesa glass. The back electrode 11 consists of a plate of gold coated steel.

The electrodes 10 and 11 are connected to a differential amplifier 12 having a 1000-5000X gain output and variable input impedance. The use of a differential amplifier allows reduction of the noise generated by both electrodes. The capacitor cell and the amplifier is contained in a housing (e.g., iron) that shields electromagnetic disturbances.

The amplifier 12 is connected to an analog/digital (A/D) converter 13 which transform the analog electrical signal in a digital form. The digitized signal is sent to a digital analyzer or a computer 14 for data storage on a magnetic medium, such as a computer diskette 15, or on a photo compact disc 16. The stored signal can be further processed to drive an image output device. Examples of image output device can be hardcopy based systems (e.g., printers, plotters, color laser imagers, photo CD based systems, and the like) or non-hardcopy based systems (e.g., cathode ray device).

### EXAMPLE 1

A silver bromoiodide emulsion comprising 12mol% of iodide was coated at 4 g/m² of Ag on a triacetate support. A set of films was exposed at increasing stops like a conventional photographic film from fog level (Dmin) to Dmax. A Xenon flash source EG&G sensitometer was used for the exposure.

At each exposure Dember effect measurements were carried out by monitoring voltage pulse intensity versus exposure. The results are shown in Table 1.

**TABLE 1**

| **Exposure Erg/cm**^{**2**} | **Delta V µV** | **Optical Density** |
|---|---|---|
| 2.8 10⁻² | 0 | 0.4 |
| 2.8 10⁻¹ | 5 | 1.2 |
| 2.8 | 30 | 1.8 |
| 2.8 10¹ | 100 | 2.0 |
| 2.8 10² | 120 | 2.1 |
| 2.8 10³ | 150 | 2.1 |

Table 1 clearly shows the relationship between exposure level and Dember effect and the correspondant optical density obtained after conventional processing of the exposed photographic film. Delta V represents the Vmax-V difference, wherein V max represents the Dember signal at Dmin and V represents the Dember signal for each measurement. In fact, the Dember signal reaches a maximum when no latent image is present.

### EXAMPLE 2

To obtain an electronic image from an image-wise exposed photographic material, the following apparatus and procedure were used.

The same film of example 1 was exposed to a template representing a sharp edge with unexposed and exposed square zones having a 10 mm side. The exposed sample was put into the sample holder of read-out apparatus comprising a glass conductive transparent front electrode and a metal back electrode. A high resolution inducing light pulse of about 2mm of diameter was obtained by delivering on the sample the whole light power of the Xenon lamp of Example 1 through an optical fiber, whose terminal part is a very sharp cone having an end opening of 2mm.

The optical fiber is scanned through the film area by a computer controlled automatic X-Y translation stage Newport PMC 200. The electrodes are connected to an Analogic data analyzer DATA 6000 that digitizes the Dember signal. The digital signal is subsequentely fed into an IBM 70 Personal Computer for storing the data. The IBM computer also controls the X-Y translation stage and stores the data together with their spatial coordinates. The stored data can be displayed on a video monitor or printed on a plotter (model Hewlett Packard model 7440A).

For each position of the scanning apparatus (one read-out each 2 mm) the computer provides for the Dember signal recording, the calculation of the Vmax-V difference and normalization of the values on a 0-1 arbitrary scale for subsequent screen viewing or plotting (wherein 0 corresponds to the maximum Dember signal and 1 the minimum Dember signal). A good density correlation with the original image has been shown by the resulting image printed by the plotter.

## Claims

1. A method of electronic processing an image-wise exposed photographic material comprising at least one light-sensitive silver halide emulsion layer said method comprising the steps of:
(1) placing said exposed photographic material between the electrodes of a capacitor connected to an amplifier,
(2) scanning said material by means of at least one radiation beam, which scanning generates an electrical signal between said capacitor electrodes,
(3) amplifying the electrical signal coming from said capacitor electrodes,
(4) converting the amplified signal into a digital signal,
(5) storing the digital signal into a recording apparatus.

2. The method according to claim 1 characterized in that said radiation source is a laser source.

3. The method according to claim 2 characterized in that said laser beam is selected in the group consisting of a HeCd laser source, an Ar laser source, a HeNe laser source, and a GaAs laser source.

4. The method according to claim 2 characterized in that the diameter of the laser beam coming from said laser source is equal to or lower than 2.0 mm.

5. The method according to claim 1 characterized in that said silver halide photographic material is selected in the group consisting of color photographic material, X-ray photographic material, graphic art photographic material, and dry silver photographic material.

6. An apparatus for electronic processing an image-wise exposed photographic material comprising at least one light-sensitive silver halide emulsion layer, said apparatus comprising:
(1) means to provide a radiation beam coming from a radiation source,
(2) means to hold the image-wise exposed silver halide photographic material between a front transparent electrode and a back electrode, said transparent electrode being between said radiation source and said exposed photographic material,
(3) means to scan the silver halide photographic material by the radiation beam coming from said radiation source, which beam generates an electrical signal in said electrodes,
(4) means to amplify the electrical signal coming from said electrodes,
(5) means to convert said electrical signal into a digital signal, and
(6) means to store said digital signal.

7. The apparatus according to claim 6 characterized in that said radiation source is a laser source.

8. The apparatus according to claim 7 characterized in that said laser beam is selected in the group of a HeCd laser source, an Ar laser source, a HeNe laser source, and a GaAs laser source.

9. The apparatus according to claim 7 characterized in that the diameter of the laser beam is equal to or lower than 2.0 mm.

10. The apparatus according to claim 6 characterized in that said transparent electrode comprises conductive glass.

11. The apparatus according to claim 6 characterized in that said back electrode comprises conductive metal.

12. The apparatus according to claim 6 characterized in that a thin film of polyester film is interposed between the photographic material and each electrode.

## Patentansprüche

1. Verfahren zur elektronischen Verarbeitung eines bildweise belichteten photographischen Materials, das mindestens eine lichtempfindliche Silberhalogenid-Emulsionsschicht aufweist, wobei das Verfahren die folgenden Schritte aufweist:
(1) Plazieren des belichteten photographischen Materials zwischen die Elektroden eines mit einem Verstärker verbundenen Kondensators,
(2) Abtasten des Materials mit Hilfe mindestens eines Strahls, wobei das Abtasten ein elektrisches Signal zwischen den Kondensatorelektroden erzeugt,
(3) Verstärken des von den Kondensatorelektroden kommenden elektrischen Signals,
(4) Umwandeln des verstärkten Signals in ein digitales Signal,
(5) Speichern des digitalen Signals in einer Aufzeichnungsvorrichtung.

2. Verfahren nach Anspruch 1, dadurch gekennzeichnet, daß die Strahlungsquelle eine Laserquelle ist.

3. Verfahren nach Anspruch 2, dadurch gekennzeichnet, daß der Laserstrahl aus der Gruppe ausgewählt wird, die aus einer HeCd-Laserquelle, einer Ar-Laserquelle, einer HeNe-Laserquelle und einer GaAs-Laserquelle besteht.

4. Verfahren nach Anspruch 2, dadurch gekennzeichnet, daß der Durchmesser des von der Laserquelle kommenden Laserstrahls gleich oder geringer als 2,0 mm ist.

5. Verfahren nach Anspruch 1, dadurch gekennzeichnet, daß das photographische Silberhalogenid-Material aus der Gruppe ausgewählt wird, die aus farbphotographischem Material, röntgenstrahl-photographischem Material, photographischem graphischem Kunstmaterial und photographischem Dry-Silver-Material besteht.

6. Vorrichtung zur elektronischen Verarbeitung eines bildweise belichteten photographischen Materials, das mindestens eine lichtempfindliche Silberhalogenid-Emulsionsschicht aufweist, wobei die Vorrichtung aufweist:
(1) eine Einrichtung zum Liefern eines von einer Strahlungsquelle kommenden Strahls,
(2) eine Einrichtung zum Halten des bildweise belichteten photographischen Silberhalogenid-Materials zwischen einer vorderen lichtdurchlässigen Elektrode und einer hinteren Elektrode, wobei sich die lichtdurchlässige Elektrode zwischen der Strahlungsquelle und dem belichteten photographischen Material befindet,
(3) eine Einrichtung zum Abtasten des photographischen Silberhalogenid-Materials durch den von der Strahlungsquelle kommenden Strahl, wobei der Strahl in den Elektroden ein elektrisches Signal erzeugt,
(4) eine Einrichtung zum Verstärken des von den Elektroden kommenden elektrischen Signals,
(5) eine Einrichtung zum Umwandeln des elektrischen Signals in ein digitales Signal, und
(6) eine Einrichtung zum Speichern des digitalen Signals.

7. Vorrichtung nach Anspruch 6, dadurch gekennzeichnet, daß die Strahlungsquelle eine Laserquelle ist.

8. Vorrichtung nach Anspruch 7, dadurch gekennzeichnet, daß der Laserstrahl aus der Gruppe ausgewählt wird, die aus einer HeCd-Laserquelle, einer Ar-Laserquelle, einer HeNe-Laserquelle und einer GaAs-Laserquelle besteht.

9. Vorrichtung nach Anspruch 7, dadurch gekennzeichnet, daß der Durchmesser des Laserstrahls gleich oder geringer als 2,0 mm ist.

10. Vorrichtung nach Anspruch 6, dadurch gekennzeichnet, daß die lichtdurchlässige Elektrode leitendes Glas aufweist.

11. Vorrichtung nach Anspruch 6, dadurch gekennzeichnet, daß die hintere Elektrode leitendes Metall aufweist.

12. Vorrichtung nach Anspruch 6, dadurch gekennzeichnet, daß ein dünner Film aus Polyesterfilm zwischen das photographische Material und jede Elektrode gebracht wird.

## Revendications

1. Procédé de traitement électronique d'un matériau photographique exposé image par image comprenant au moins une couche d'émulsion d'halogénure d'argent sensible à la lumière, ledit procédé comprenant les étapes de :
(1) Mise en place dudit matériau photographique exposé entre les électrodes d'une capacité reliée à un amplificateur,
(2) Balayage dudit matériau au moyen d'au moins un faisceau de rayonnement, ce balayage engendrant un signal électrique entre lesdites électrodes de capacité,
(3) Amplification du signal électrique venant desdites élecrodes de la capacité,
(4) Conversion du signal amplifié en un signal numérique, et
(5) Conservation du signal numérique dans un appareil d'enregistrement.

2. Procédé selon la revendication 1, caractérisé en ce que ladite source de rayonnement est une source laser.

3. Procédé selon la revendication 2, caractérisé en ce que ledit faisceau laser est choisi dans le groupe constitué par une source laser HeCd, une source laser Ar, une source laser HeNe, et une source laser GaAs.

4. Procédé selon la revendication 2, caractérisé en ce que le diamètre du faisceau laser venant de ladite source laser est égal ou inférieur à 2,0 mm.

5. Procédé selon la revendication 1, caractérisé en ce que ledit matériau photographique d'halogénure d'argent est choisi dans le groupe constitué par un matériau photographique couleur, un matériau photographique pour rayons X, un matériau photographique pour arts graphiques, et un matériau photographique à base d'argent sec.

6. Appareil pour traitement électronique d'un matériau photographique exposé image par image comprenant au moins une couche d'émulsion d'halogénure d'argent sensible à la lumière, ledit appareil comprenant :
(1) Un moyen pour fournir un faisceau de rayonnement venant d'une source de rayonnement,
(2) Un moyen pour maintenir le matériau photographique à base d'halogénure d'argent exposé image par image entre une électrode transparente frontale et une électrode postérieure, ladite électrode transparente étant entre ladite source de rayonnement et ledit matériau photographique exposé,
(3) Un moyen pour balayer le matériau photographique à base d'halogénure d'argent par le faisceau de rayonnement venant de ladite source de rayonnement, ce faisceau engendrant un signal électrique dans lesdites électrodes,
(4) Un moyen pour amplifier le signal électrique venant desdites électrodes,
(5) Un moyen pour convertir ledit signal électrique en un signal numérique, et
(6) Un moyen pour conserver ledit signal numérique.

7. Appareil selon la revendication 6, caractérisé en ce que ladite source de rayonnement est une source laser.

8. Appareil selon la revendication 7, caractérisé en ce que ledit faisceau laser est choisi dans le groupe d'une source laser HeCd, d'une source laser Ar, d'une source laser HeNe, et d'une source laser GaAs.

9. Appareil selon la revendication 7, caractérisé en ce que le diamètre du faisceau laser est égal ou inférieur à 2,0 mm.

10. Appareil selon la revendication 6, caractérisé en ce que ladite électrode transparente comprend un verre conducteur.

11. Appareil selon la revendication 6, caractérisé en ce que ladite électrode postérieure comprend un métal conducteur.

12. Appareil selon la revendication 6, caractérisé en ce qu'on interpose une mince pellicule de polyester entre le matériau photographique et chaque électrode.
